# EUROPÄISCHE PATENTSCHRIFT

(11) **EP 2 151 032 B1**
(45) Veröffentlichungstag und Bekanntmachung des Hinweises auf die Patenterteilung: **17.08.2016**
(21) Anmeldenummer: 07726024.8
(22) Anmeldetag: 07.06.2007
(51) Int. Cl.: H02J 3/00, H02J 3/14, H02J 13/00

(54) **VERFAHREN ZUM BETREIBEN EINER ANORDNUNG MIT ZUMINDEST EINER ENERGIEVERTEILEINRICHTUNG**
METHOD FOR THE OPERATION OF AN ARRANGEMENT WITH AT LEAST ONE ENERGY DISTRIBUTION DEVICE
PROCÉDÉ D'EXPLOITATION D'UN SYSTÈME COMPORTANT AU MOINS UN DISPOSITIF RÉPARTITEUR D'ÉNERGIE

(43) Veröffentlichungstag der Anmeldung: 10.02.2010
(73) Patentinhaber: Siemens Aktiengesellschaft, 80333 München (DE)
(72) Erfinder: APEL, Rolf, 90427 Nürnberg (DE); BRANDT, Christian, Peter, 13158 Berlin (DE); GRIMMINGER, Jochen, 80638 München (DE); HÖFLER, Werner, 90542 Eckental (DE); JACHMANN, Thomas, 90530 Wendelstein (DE); KERN, Claus, 90518 Altdorf (DE); LANG, Gerhard, 14557 Wilhelmshorst (DE); SOUTHALL, Alan, 69190 Walldorf (DE)
(86) Internationale Anmeldenummer: PCT/EP2007/005260
(87) Internationale Veröffentlichungsnummer: WO 2008/148418

(56) Entgegenhaltungen:
- DE-A1- 10 015 899
- DE-A1- 19 850 496
- US-A1- 2002 111 905
- US-A1- 2003 036 820

## Beschreibung

Die Erfindung bezieht sich auf ein Verfahren zum Betreiben einer Anordnung mit zumindest einer Energieverteileinrichtung, einer Mehrzahl an Energieverbrauchseinrichtungen und einem Energieversorgungsnetz, an das die zumindest eine Energieverteileinrichtung und die Mehrzahl an Energieverbrauchseinrichtungen angeschlossen sind.

Strom ist bekanntermaßen nur in sehr begrenztem Umfang speicherbar. Dieser Umstand führt dazu, dass erzeugte Energie stets auch irgendwo abgenommen werden muss. Die Einbeziehung von alternativen und wetterabhängigen Energien sowie die absolut unkoordinierte Abnahme durch die Endverbraucher führen bei derzeitigen Energieverteilsystemen zu einer sehr hohen Lastdynamik.

Zwischen Energieerzeuger und Endverbraucher gibt es derzeit keine direkte Kopplung zur Regelung und Optimierung des Lastflusses. Dies führt beispielsweise dazu, dass überschüssige Energie, die z.B. durch Windkraftanlagen in Schwachlastzeiten erzeugt wird, nicht kostenoptimiert bzw. umweltschonend genutzt werden kann.

Auch wirtschaftlich nachteilig ist diese hohe Lastdynamik, da ungeplante Lastflussverschiebungen im Netzverbund zu Vertragsstrafen führen können, wenn vorab vereinbarte Energieleistungen nicht abgenommen werden können. Diese Situation verschärft sich mit zunehmender Installation von alternativen Energieerzeugungsanlagen, wie zum Beispiel durch Windparks, Blockheizkraftwerke, dezentrale Energieerzeuger etc., da diese keine konstante Energiebereitstellung gewährleisten können. Die dadurch im Mittel noch höhere Dynamik zwischen Spitzenlast- und Schwachlastbetrieb als bisher stellt noch höhere technische Anforderungen an die von Energieversorgern oder Netzbetreibern betriebenen Energieverteileinrichtungen, mit denen Energieversorgungsnetze betrieben werden.

Aus der Druckschrift US 2003/0036820 A1 ist ein gattungsgemäßes Verfahren bekannt. Ferner ist aus der Druckschrift DE 10015899 A1 eine Energieverteileinrichtung mit einem Vorschaltgerät zum Steuern von elektrischen Verbrauchern bekannt.

Der Erfindung liegt die Aufgabe zugrunde, ein Verfahren zum Betreiben einer Anordnung mit zumindest einer Energieverteileinrichtung anzugeben, bei dem im Energieversorgungsnetz im Mittel eine geringere Lastdynamik bzw. weniger Lastschwankungen als bisher erreicht werden.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die Energieverbrauchseinrichtungen und die Energieverteileinrichtung über eine Kommunikationseinrichtung in Verbindung stehen und die Energieverteileinrichtung Energielieferbedingungen in Abhängigkeit von der jeweiligen Netzlast oder Netzlastschwankungen bzw. Lastdynamik des Energieversorgungsnetzes zeitabhängig ermittelt bzw. festlegt und dass den Energieverbrauchseinrichtungen gemäß deren individuell abgespeicherten Energieabnahmebedingungen individuell Energie bereitgestellt wird oder nicht. Eine zeitabhängige Ermittlung der (dynamischen) Netzlast bzw. von Lastschwankungen kann beispielsweise durch ein zeitlich kontinuierliches, regelmäßiges (in regelmäßigen Zeitabständen), unregelmäßiges, beispielsweise stochastisch verteiltes, Messen der Netzlast erfolgen.

Ein wesentlicher Vorteil des erfindungsgemäßen Verfahrens besteht darin, dass die Energieverteileinrichtung erfindungsgemäß in die Lage versetzt wird, auf die Lastdynamik selbst Einfluss zu nehmen, indem sie die jeweilige Netzlast des Energieversorgungsnetzes zeitabhängig ermittelt und in Abhängigkeit von der jeweiligen Netzlast bzw. von festgestellten oder zu erwartenden Netzlastschwankungen Energielieferbedingungen individuell festlegt. Konkret hat die Energieverteileinrichtung somit die Möglichkeit, bei einem Energieüberangebot über eine Anpassung der Energielieferbedingungen die Energieabgabe für die Energieverbraucher attraktiver zu machen und bei absehbarem oder bereits aufgetretenem Energiemangel eine Energielieferung für die Energieverbraucher zu erschweren bzw. unattraktiver zu machen.

Die Energielieferbedingungen können eine Vielzahl an Parametern vorsehen: Beispielsweise können die Energielieferbedingungen festlegen, welche Mindestqualität die Energie erreicht, beispielsweise - im Falle elektrischer Energie -
- welche Mindestfrequenzstabilität überschritten wird und
- welche maximale Spannungsschwankung, welches maximale Maß an Oberwellen oder welcher maximale Ausstoß an Kohlendioxid (CO2) pro Kilowattstunde unterschritten wird.

Alternativ oder zusätzlich können die Energielieferbedingungen auch einen Preis oder Preisindikator enthalten, der die von der Energieverteileinrichtung verlangte Vergütung pro Leistungseinheit (z. B. kWh) definiert. Auch können die Energielieferbedingungen festlegen, dass die Energie auf eine bestimmte Art und Weise (z. B. Atomkraft, Verbrennen fossiler Brennstoffe, erneuerbare Energiequellen (Windenergie, Solarenergie, Wasserkraft)) erzeugt wird oder auf bestimmte Art und Weise gerade nicht erzeugt wird.

Die Betreiber der Energieverteileinrichtungen, also die Energienetzbetreiber bzw. die Energieversorgungsunternehmen, erhalten durch die beschriebene dynamische Anpassung der Energielieferbedingungen somit einen mittelbaren Einfluss auf das Verhalten der Verbraucher und können somit den Lastfluss automatisch selbst optimieren und damit die Energieverteilung quasi "in Echtzeit" stabilisieren. Daraus ergeben sich für die Netzbetreiber bzw. Energieversorgungsunternehmen deutliche Kostenvorteile, denn Netzüberlastungen und dadurch bedingte Abschaltungen können vermieden werden; dies führt zu höherer Versorgungssicherheit und höherer Energiequalität.

Gemäß der Erfindung ist vorgesehen, dass die Energieverteileinrichtung ein ihre jeweiligen Energielieferbedingungen angebendes Abgabesignal erzeugt und dieses über die Kommunikationseinrichtung an die Energieverbrauchseinrichtungen sendet und dass zumindest eine der Energieverbrauchseinrichtungen individuell prüft, ob die mit dem Abgabesignal empfangenen Energielieferbedingungen mit ihren individuell abgespeicherten Energieabnahmebedingungen übereinstimmen, und im Falle einer Übereinstimmung zwischen Energielieferbedingungen und Energieabnahmebedingungen die angebotene Energie zu den empfangenen Energielieferbedingungen abnimmt und andernfalls ablehnt. Bei dieser Variante erfolgt die Steuerung der Energieabnahme also verbraucherseitig, so dass der Endkunde nichts über sein eigenes Verhalten nach außen preisgeben muss, denn die Informationen fließen nur vom Energieversorger zum Endkunden und nicht umgekehrt.

Gemäß einer anderen bevorzugten Ausgestaltung des Verfahrens ist vorgesehen, dass zumindest eine der Energieverbrauchseinrichtungen ihre individuell abgespeicherten Energieabnahmebedingungen an die Energieverteileinrichtung über die Kommunikationseinrichtung übermittelt und die Energieverteileinrichtung die Energieabnahme dieser Energieverbrauchseinrichtung anschließend durch ein individuelles Steuersignal steuert. Bei dieser Ausgestaltung des Verfahrens erfolgt die Steuerung der Energieabnahme also seitens der Energieverteileinrichtung.

Die beiden oben beschriebenen Varianten können auch miteinander kombiniert werden, indem beispielsweise einige Verbraucher selbst steuern und andere Verbraucher seitens der Energieverteileinrichtung gesteuert werden.

Auch kann im Rahmen einer weiteren bevorzugten Ausgestaltung des Verfahrens vorgesehen werden, dass eine an die Kommunikationseinrichtung angeschlossene Verwaltungseinrichtung die Energieabnahmebedingungen der Energieverteileinrichtung speichert und dass die Energieverbrauchseinrichtungen jeweils die in der Verwaltungseinrichtung abgespeicherten Energielieferbedingungen mit ihren individuell abgespeicherten Energieabnahmebedingungen vergleichen und im Falle einer Übereinstimmung die Energie von dem Energieversorgungsnetz abnehmen und andernfalls ablehnen. Bei dieser Variante erfolgt die Kommunikation zwischen der Energieverteileinrichtung und den Energieverbrauchseinrichtungen nur mittelbar unter Einschaltung der Verwaltungseinrichtung, die das "Aushandeln" zwischen Energieabnahmebedingungen und Energielieferbedingungen ermöglicht.

Im Übrigen kann eine solche Verwaltungseinrichtung ein energieanbieterübergreifendes Tradingsystem oder Handelssystem bilden. Energieverteileinrichtungen, Energieverbrauchseinrichtungen und Energieerzeugungseinrichtungen können mit diesem über ein beispielsweise standardisiertes Kommunikationsnetzwerk verbunden werden, z.B. das Internet. Die Energieverbraucher können über das Tradingsystem bestimmte Energiemengen mit Angabe einer Preisgrenze kaufen oder einfach bei Bedarf (on demand) das preiswerteste Energieangebot vom preiswertesten Energieerzeuger nutzen bzw. kaufen. Den Energieverbrauchern kann beispielsweise über eine tabellarische Auflistung unter Angabe von Preisen und weiteren Kriterien (z.B. Herstellungsart Windkraft, Wasserkraft, Atomkraft etc.) eine Auswahlmöglichkeit angeboten werden.

Entsprechend können die Energieverteileinrichtungen bestimmte Energiemengen anbieten, wenn ein attraktives Preisniveau oder ansonsten attraktive Energieabnahmebedingungen erreicht worden sind oder wenn ausreichende Energieanforderungen vorliegen. Damit die Nutzer bzw. Teilnehmer des Systems proaktiv über die jeweils gültigen Preise informiert werden, kann ein event-orientiertes System eingesetzt werden, das die Preisinformation bzw. die Energieabnahmebedingungen im Netzwerk durch IP Multicasting, Application Layer Multicasting (z.B. HMTP, NICE und NARADA), WebService Mechanismen (wie WS Eventing oder WS Notification) oder Power-Line Netzwerktechnologie verbreitet.

Durch die dynamische Anpassung der Energielieferbedingungen seitens der Energieverteileinrichtung, insbesondere durch eine dynamische Anpassung der Preispolitik, wird der Endverbraucher abhängig von der jeweiligen Netzlastsituation zu einem netzlastoptimierten Verbrauch motiviert. Der Endverbraucher hat damit beispielsweise die Möglichkeit, Geräte und Anlagen mit hohem Energieverbrauch abhängig vom aktuellen Preisniveau ein- bzw. auszuschalten. Das beschriebene Trading- bzw. Verwaltungssystem ist damit ein stabilisierendes Element für die Energieversorgungsnetze.

Dezentrale Energieerzeuger, wie beispielsweise Haushalte mit Solarenergieanlagen, können mit diesem System auch bestimmte Energiemengen im Netzwerk anbieten, wenn sie diese aufgrund von Abwesenheit (z.B. Urlaub) nicht selbst nutzen können. Auch kann der Energiebedarf für bestimmte Herstellungsarten über das Tradingsystem erfasst werden; dies dient der Preisfindung und Preisdifferenzierung zwischen den einzelnen Erzeugungsarten. Energieartspezifische Investitionen können davon abgeleitet werden. Insgesamt wird ein Beitrag zum Umweltschutz geleistet, weil sich Energieverbrauch und Energiebereitstellung gemeinsam miteinander optimieren lassen.

Die Energieverbrauchseinrichtungen - nachfolgend auch nur kurz Endgeräte oder Geräte genannt - können beispielsweise mit einem Vorschaltgerät ausgestattet werden, das über die Kommunikationseinrichtung die Preisspanne für einen definierten Zeitraum erhält; der Endkunde kann in diesem Falle einen kostenoptimierten Energiebezug sicherstellen, indem er beispielsweise seine Endgeräte auf ein für ihn akzeptables Preisniveau einstellt. Das Vorschaltgerät zeigt vorzugsweise die aktuelle Preisspanne in einer geeigneten Form an.

Die Netzbetreiber bzw. Energieversorger können mit den Energieverteileinrichtungen ihrerseits ihre Energieeinkaufspreise, für die sie Energie beziehen wollen, vorgeben, beispielsweise in Form einer Preisspanne. Der Netzbetreiber bzw.

Energieversorger hat damit ein weiteres Instrumentarium zur Lastflusssteuerung.

Zur Kommunikation zwischen den Energieverteileinrichtungen und den Energieverbrauchseinrichtungen wird bevorzugt parallel zum Stromnetz ein Kommunikationsnetz (z. B. WLAN, DSL, UMTS, etc.) zur Verfügung gestellt, mit dem beispielsweise eine Preisspanne übertragen wird und an das beispielsweise fernauslesbare Energiezähler zur Abfrage des endkundenseitigen Energieverbrauches pro Preisintervall angeschlossen werden können.

Alternativ kann das Energienetz auch selbst zur Kommunikation genutzt werden und so die aktuellen Preise selbst übertragen, beispielsweise analog zu Vorwahlgeräten bei Telefonen, die automatisch die billigste Vorwahl nutzen und sich automatisch aktualisieren. Ein Vorteil der Nutzung des Stromnetzes bestünde darin, dass die Informationen ohne zusätzliche Verkabelung am notwendigen Ort verfügbar wären.

Auch kann vorgesehen werden, dass endkunden- bzw. verbraucherseitig nicht nur ein Tarif ausgewählt wird, sondern auch eine zeitliche "Schmerzgrenze" bzw. ein spätester Liefertermin, bis zu dem eine Energielieferung erfolgen soll. Eine solche Verfahrensvariante wäre typischerweise einsetzbar für Geschirrspüler und Waschmaschinen, Nachtspeicheröfen (als Flexibilisierung des bisherigen "Nachttarifs"), Boiler, usw.

Auch kann für jedes Endgerät individuell eine lokale, zentrale oder dezentrale Policy-Verwaltung vorgesehen werden, womit jeweils auch statistisch tragfähige Nachfragemodelle realisiert werden können, beispielsweise in Kombination mit Spannungshöhe, Frequenz und Phasenansteuerung/-beschneidung.

Auch wird es als vorteilhaft angesehen, wenn die Anpassung der Energielieferbedingungen bzw. der Preispolitik mit der Erzeugung der Energie gekoppelt wird. Durch den Trend der Miniaturisierung wird es in Zukunft möglich sein, verschiedene Arten von "Energiespeichern" durch Privatleute im eigenen Heim betreiben zu lassen (z. B. Schwungräder, Wasserspeicher auf dem Dachboden (oder Fabrikhalle, Hochhaus, ...), Wärmespeicher, Wasserstofferzeugung, Brennstoffzellen, Akkus usw. Durch eine entsprechende Steuerung, beispielsweise durch eine entsprechende Preispolitik, können "Kleinerzeuger" motiviert werden, Kleinstanlagen bei sich zu installieren und zu günstigen Preisen Strom zu entnehmen, diesen "zwischenzuspeichern" und bei Spitzenbedarf wieder abzugeben. Der "Kleinerzeuger" kann nach Angebot und Nachfrage eigenverantwortlich entscheiden. Ein vorteilhafter Aspekt dieser letztgenannten Verfahrensvariante besteht dabei darin, dass die bisher bekannte zentrale Organisation der Energiezwischenspeicherung mit Großanlagen (z. B. in Form von Pumpspeicherwerken) dezentralisiert wird und für jeden zugänglich gemacht wird. Die Regelung kann automatisiert erfolgen, wobei Angebot und Nachfrage nur über den Preis bzw. sonstige Parameter, wie eingangs beschrieben, geregelt wird. D.h. wenn Energie gebraucht wird, muss der Preis nur solange gesteigert werden, bis die Kleinsterzeuger ihre Energie zur Verfügung stellen; es wird also im Idealfall nur noch eine einzige Stellschraube benötigt. Die Vorteile dieser Vorgehensweise lauten stichpunktartig:
- Dezentrale Zwischenspeicher werden im freien Markt verfügbar.
- Privatinvestitionen ermöglichen kostengünstige Zwischenspeicherung.
- Eigendynamik wird durch Angebot und Nachfrage gesteigert.
- Der Aufwand für die Strombereitstellung wird bei dem Netzbetreiber reduziert, da die Strombereitstellung teilweise ausgelagert wird.
- Eine zentrale Kontrolle und Überwachung bleibt dennoch einfach realisierbar.

Die Verfügbarkeit der Energie leidet unter dem beschriebenen Modell erfreulicherweise nicht, da durch die Preispolitik auch ein hoher Anreiz zum Zwischenpuffern der Energie geschaffen werden kann. Wenn nämlich der Preisunterschied zwischen dem Strom, den man z.B. in der Nacht zum "Puffern" erhalten kann, und dem Strom, den man um 12:00 Mittags wieder verkaufen kann, sehr groß wird, werden sich in jedem Fall Anbieter zur Zwischenspeicherung finden. In der Praxis wird sich zeigen, dass die hier beschriebenen dezentralen Systeme aus diesem Grund besser funktionieren werden als die bisher bekannten zentralen Versorgungssysteme.

Erreicht wird also eine typische Win-Win-Situation, denn der Endverbraucher reduziert Stromkosten und der Netzbetreiber optimiert seine Ressourcen. Der Netzbetreiber kann in einer Spitzenlastsituation die Endverbraucher durch Änderung der Lieferbedingungen herunterregeln und die damit gewonnene Energiereserve zum Höchstpreis im Europäischen Netzverbund verkaufen. Die Netzbetreiber haben insbesondere über die Preisvorgabe direkten Einfluss auf den Energieverbrauch der Endkunden und können somit den Lastfluss optimieren und damit die Energieverteilung stabilisieren. Daraus ergeben sich für den Netzbetreiber erhebliche Kostenvorteile, da Überlastungen und dadurch bedingte Abschaltungen vermieden werden können; dies führt zu höherer Versorgungssicherheit und höherer Energiequalität.

Auch können Wettbewerbsvorteile für Endgerätehersteller ermöglicht werden, da Endgerätehersteller als Trendsetter und Innovationsführer auftreten können, z. B. können Waschmaschinen mit integrierter Steuereinrichtung für eine intelligente Stromabschaltung angeboten werden und als umwelt- und ressourcenschonend deklariert werden. Insgesamt wird eine Entlastung der Umwelt durch eine effizientere Nutzung vorhandener Ressourcen als bisher erreicht.

Über die beschriebene Kommunikationseinrichtung kann im Übrigen auch ein Authentifizierungssystem eingerichtet werden, das nur berechtigten Anwendern eine Teilnahme erlaubt, also beispielsweise solchen, die einen entsprechenden Serviceoder Wartungsvertrag abgeschlossen haben.

Als Erfindung wird außerdem ein Vorschaltgerät zum Anschließen einer Energieverbrauchseinrichtung an ein Energieversorgungsnetz angesehen, welches die Merkmale des Anspruchs 5 aufweist.

Erfindungsgemäß ist das Vorschaltgerät ausgestattet mit einer Kommunikationsschnittstelle zur Kommunikation mit einer Energieverteileinrichtung oder zur Kommunikation mit einer Verwaltungseinrichtung, die Energielieferbedingungen der an das Energieversorgungsnetz angeschlossenen Energieverteileinrichtungen speichert, einer Eingabeeinrichtung zur verbraucherseitigen Eingabe von Energieabnahmebedingungen, einer Steuereinrichtung, die die verbraucherseitigen Energieabnahmebedingungen mit von der Energieverteileinrichtung oder der Verwaltungseinrichtung empfangenen Energielieferbedingungen vergleicht, und einem mit der Steuereinrichtung verbundenen Schalter, der elektrisch zwischen die Energieverbrauchseinrichtung und das Energieversorgungsnetz schaltbar ist und der von der Steuereinrichtung einschaltbar ist, wenn die verbraucherseitigen Energieabnahmebedingungen den empfangenen Energielieferbedingungen entsprechen, und der von der Steuereinrichtung ausschaltbar ist, wenn die verbraucherseitigen Energieabnahmebedingungen von den empfangenen Energielieferbedingungen abweichen.

Das vorschaltgerät ist in einen Betriebsmodus schaltbar, bei dem die Steuerungshoheit über den Schalter des Vorschaltgeräts der Energieverteileinrichtung derart übertragen ist, dass die Energieverteileinrichtung den Schalter selbsttätig ein- und ausschalten oder stufenlos regeln kann. Die letztgenannte Variante des stufenlosen Regelns ist insbesondere dann interessant, wenn eine Integration des Vorschaltgerätes in die Energieverbrauchseinrichtung und/oder eine datenmäßige Kopplung der Geräte erfolgt und das Vorschaltgerät so Wissen über das Laufzeitverhalten der Energieverbrauchseinrichtung mit in die Regelentscheidung einbeziehen kann (z.B. maximale Latenzzeiten für Arbeitsschritte, aktuelle Messwerte und deren Abweichung zu den Sollwerten etc.).

Auch wird es als vorteilhaft angesehen, dass das Vorschaltgerät eine Betriebsart zur Verfügung stellt, in der das Vorschaltgerät den voraussichtlichen Energiebedarf der Energieverbrauchseinrichtung an die Energieverteileinrichtung übermittelt und abwartet, bis die Energieverteileinrichtung den Schalter selbsttätig ein- und ausschaltet. Vorzugsweise übermittelt das Vorschaltgerät auch eine Zeitspanne oder eine Zeitgrenze, innerhalb derer bzw. bis zu der die Energielieferung erfolgen soll.

Bevorzugt ist das Vorschaltgerät geeignet, zumindest einen (internen) Messwert der Energieverbrauchseinrichtung und/oder zumindest eine Verbrauchskenngröße der Energieverbrauchseinrichtung zu ermitteln und diese an die Energieverteileinrichtung oder die Verwaltungseinrichtung weiterzuleiten. Beispielsweise kennzeichnet die Verbrauchskenngröße den Maximalverbrauch, die Verbrauchsdauer und/oder die Verbrauchshäufigkeit der Energieverbrauchseinrichtung. Im Falle einer Verfügbarkeit auch interner Messwerte der Energieverbrauchseinrichtung kann eine noch bessere Steuerung erfolgen, so dass letztlich der Benutzer der Energieverbrauchseinrichtung keinerlei Unterschied im Verhalten des Gerätes sieht (z. B. im Falle einer Kühltruhe), aber dabei trotzdem Energiekosten spart.

Das Vorschaltgerät kann beispielsweise eine separate Komponente sein, die der Energieverbrauchseinrichtung endkundenseitig vorgeschaltet wird, alternativ kann das Vorschaltgerät auch baulich mit der zugeordneten Energieverbrauchseinrichtung verbunden oder in dieser integriert sein. Auch kann das Vorschaltgerät als eine Art intelligente Steckdose ausgeführt sein, die gebäudeseitig zur Verfügung gestellt wird.

Durch den Gebrauch des beschriebenen Vorschaltgeräts bekommt der Endverbraucher in vorteilhafter Weise die Möglichkeit, Geräte und Anlagen mit hohem Energieverbrauch abhängig vom aktuellen Preisniveau ein- bzw. auszuschalten.

Das Vorschaltgerät kann beispielsweise eine Kommunikationsschnittstelle in Form einer WLAN-Internetverbindungseinrichtung oder einer PowerLine-Carrier-Verbindungseinrichtung aufweisen.

Auch kann eine Anzeige vorhanden sein, die die verbraucherseitig eingegebenen Energieabnahmebedingungen und/oder die jeweiligen Energielieferbedingungen anzeigt. Beispielsweise kann der Endverbraucher über die Kommunikationseinrichtung die voraussichtliche Preisspanne der nächsten Tage erhalten und diese auf dem Vorschaltgerät anzeigen lassen. Er kann in diesem Fall mit dem Vorschaltgerät beispielsweise die Preisgrenze für die Zuschaltung bzw. Abschaltung der Energieverbrauchseinrichtung vorgeben.

Das Vorschaltgerät kann im Übrigen auch als Zusatzkomponente in handelsübliche Netzwerk-Router oder WLAN Hotspots integriert werden.

Der Endverbraucher kann dem Energieversorgungsunternehmen zu günstigeren Energiebezugskonditionen auch die Steuerungshoheit für das Vorschaltgerät direkt überlassen. Zur automatischen Lastflusssteuerung werden in diesem Falle anstatt der Preisspanne direkte Kommandos zum Ein- bzw. Ausschalten der Energieverbrauchseinrichtungen über die Kommunikationseinrichtung an das Vorschaltgerät abgesetzt. Vorzugsweise ist das Vorschaltgerät mit der Energieverbrauchseinrichtung datenmäßig gekoppelt, insbesondere im Falle einer Integration des Vorschaltgeräts in die Energieverbrauchseinrichtung, um bei Bedarf Wissen über das Verhalten, beispielsweise das zeitliche Lastverhalten, der Energieverbrauchseinrichtung zu ermitteln und dieses Wissen beispielsweise zu der Energieverteileinrichtung zu übermitteln, damit letztere ihre Steuerfunktion optimal wahrnehmen kann.

Vorzugsweise werden Kühlgeräte, z.B. Gefriertruhen, mit einem Vorschaltgerät ausgestattet. In diesem Fall können die Netzbetreiber bzw. Energieversorgungsunternehmen die Kühlgeräte ferngesteuert veranlassen, zeitlich kurz vor einem erwarteten Lastanstieg ihr Kältespeicherpotential aufzufüllen, was einen positiven Effekt für die Netzregelung hätte. Beispielsweise könnte die Leistungs-Frequenzregelung des Energieversorgers im Falle eines prognostizierten Lastanstiegs vorausschauend beginnen, die Kraftwerksproduktion zu steigern; die zunächst entstehende Überproduktion könnte von den Kühlgeräten verbraucht werden: Wenn dann anschließend der prognostizierte Lastanstieg eintritt, ist die Kraftwerksproduktion schon entsprechend erhöht. Die durch den Lastanstieg hervorgerufene Lastspitze lässt sich dann abmildern, indem der größte Teil der Kühlgeräte für eine bestimmte Zeit abgeschaltet wird; dies ist möglich, da die Temperatur in den Kühlgeräten zuvor abgesenkt wurde und demgemäß noch ausreichend tief ist.

Auch ist es mit dem Vorschaltgerät vorzugsweise möglich, den Einsatz eines elektrischen Geräts, dessen Einsatz zeitlich unkritisch ist (z.B. Waschmaschine oder Geschirrspüler) vorzuprogrammieren. Das Vorschaltgerät sendet den voraussichtlichen Energiebedarf über seine Kommunikationsschnittstelle an die Energieverteileinrichtung oder die Verwaltungseinrichtung, die dann den Einsatz des elektrischen Geräts zeitlich optimiert und zur gegebenen Zeit dem Vorschaltgerät ein Signal zum Starten des elektrischen Geräts sendet.

Das beschriebene Vorschaltgerät hat den großen Vorteil, dass es keinen Eingriff in bereits bestehende Geräte erfordert und dementsprechend auch keine Geräteanbieter überzeugt werden müssen, eine solche Funktionalität in ein Gerät einzubauen.

Vorzugsweise sind die Vorschaltgeräte dazu geeignet, weitere Informationen über sich preiszugeben, z.B. um welche Art

Energieverbrauchseinrichtung es sich handelt und welche Lastkurven diese benötigen. Auch können die Vorschaltgeräte Messwerte an die Energieverteileinrichtung oder die Verwaltungseinrichtung übergeben (z.B. gewünschte und aktuelle Temperatur bei Kühlschränken/Truhen oder Heizungen), so dass eine externe Steuerung noch vorausschauender arbeiten könnte. Auch diesbezüglich wird es als vorteilhaft angesehen, wenn das Vorschaltgerät mit der Energieverbrauchseinrichtung datenmäßig gekoppelt ist, um bei Bedarf Wissen über das Verhalten, beispielsweise das zeitliche Lastverhalten, der Energieverbrauchseinrichtung zu ermitteln und zu verwerten.

Bevorzugt wird das Vorschaltgerät darüber hinaus so ausgestaltet, dass es über das Verhalten der Energieverbrauchseinrichtung lernt und dieses Wissen zur Prognoseoptimierung nutzt und ggf. der Energieverteileinrichtung zur Verfügung stellt.

Auch wird es als vorteilhaft angesehen, wenn das Vorschaltgerät auslesbar und/oder programmierbar ist, beispielsweise über eine Computerschnittstelle, so dass eine Feinjustierung bzw. Auswertung des (Langzeit)Laufzeitverhaltens für den Endkunden möglich wird.

Eine optimale Abstimmung zwischen den Geräten, (z. B. hinsichtlich des Energieverbrauchs), den Kunden (z. B. hinsichtlich des Wunsches nach Kostenreduktion) und den Netzbetreibern bzw. Energieversorgern (z. B. hinsichtlich der Reduktion der Spitzenlast) wird durch das Vorschaltgerät somit also in einfacher Weise ermöglicht.

Besonders bevorzugt liegen die Steuerung und das Zu- und Abschalten der Energieverbrauchseinrichtungen bei der Energieverteileinrichtung und nicht beim Kunden. Das kann soweit gehen, dass der Kunde keine Vorprogrammierung zu machen hat; in diesem Fall hätte der Kunde mit dem beschriebenen Steuermechanismus nichts mehr zu tun, außer dass er den Automatismus zulassen muss. Die komplette Regelung würde durch die Energieverteileinrichtung erfolgen. Dies wäre eine Umkehr zu vorbekannten Steuermechanismen, bei denen der Kunde entscheidet und regelt und der Netzbetreiber bzw. Energieversorger stets Energie liefern können muss.

Durch den Zugriff insbesondere auf große Verbraucher (Heizung, Warmwasseraufbereitung, Klimaanlage) von der Energieverteileinrichtung aus lassen sich im Übrigen auch weitere Dienste für den Endkunden anbieten: Beispielsweise könnten die Endkunden von der Ferne (z.B. über Mobiltelefone) ihre Geräte steuern. Hierzu könnte der Netzbetreiber bzw. Energieversorger, der den Zugriff auf die Steuerung der endkundenseitigen Verbrauchseinrichtungen hat, beispielsweise mittels seiner Energieverteileinrichtung eine Dienstleistung samt Infrastruktur anbieten, mit der der Endkunde für seine Verbrauchseinrichtungen Kommandos über eine Schnittstelle (Email, Web, SMS, oder gar über Sprachdienst) gesteuert absetzen kann. Beispielsweise kann dem Endkunden ermöglicht werden, am Abend, bevor er sich auf den Nachhause-Weg macht, oder am letzten Tag vor der Rückkehr aus einem Urlaub die Heizung, die Wasseraufbereitung bzw. Klimaanlage von einem Sparmodus wieder in den Normalzustand zu versetzen, wodurch ihn ein kuschelig warmes oder angenehm kühles Zuhause erwartet, ohne die Heizung/Klimaanlage während der Abwesenheit mit voller Leistung laufen lassen zu müssen. Dies würde den Energieerzeugern Spitzenbelastungen nehmen und den Kunden Geld sparen.

Auch könnte beispielsweise in Single-Haushalten das Kochen optimiert werden, indem ein Gericht schon am Morgen im Ofen platziert wird, jedoch dieser erst beim Verlassen des Büros angeheizt wird. So ist das Essen fertig, wenn man nach Hause kommt.

Auf ähnliche Weise lässt sich eine Datenverbindung zum Sicherungskasten für vergessliche oder ältere Personen nutzen, um herauszufinden, ob gefährliche Geräte in Betrieb sind oder korrekt ausgeschaltet wurden. Hierzu wäre beispielsweise die oben bereits erwähnte Identifikation der Geräte in den Steckdosen nützlich, die zum Beispiel über ihren aktuellen Zustand, ihre aktuelle Verwendungsdauer etc. Auskunft geben können und so bei geeigneter Informationsverarbeitung in der Energieverteileinrichtung einen Hausbrand vermeiden helfen können und/oder die Gewissheit vermitteln, dass kein Gerät eingeschaltet gelassen wurde, sofern beispielsweise eine entsprechende Fernabfrage durch den Endkunden bei dem Energieversorgungsunternehmen möglich ist.

Auch wird es als vorteilhaft angesehen, wenn die Energieverteileinrichtungen durch eine Kommunikation mit den Vorschaltgeräten und/oder durch eine Kommunikation mit den Energieverbrauchseinrichtungen einen gezielteren Einblick als bisher in das Vorhandensein großer Verbraucher erlangen und so in die Lage versetzt werden, durch repräsentative, automatisch erfasste Stichproben mittelfristige und langfristige Verbrauchsprognosen zu optimieren.

Auch für den Kunden werden sich Vorteile ergeben, wenn die Energieverbrauchseinrichtungen Informationen über sich preisgeben. So könnte eine Dienstleistung angeboten werden, die bei Ausfall der Heizung oder der Kühlung automatisch einen Notdienst verständigt und so das Auskühlen des Hauses oder das Verderben von Waren verhindert.

Eine Übertragung von Informationen beispielsweise in Hausnetzen und in Verteilnetzen, z. B. über Powerline Carrier, kann im Übrigen in vorteilhafter Weise noch dadurch verbessert werden, dass eine Konsolidierung bzw. Zusammenfassung der Informationen der jeweiligen Haushalte im Verteilerkasten vor der Weitergabe über das Verteilnetz durchgeführt wird. Bevorzugt werden die Energieverbrauchseinrichtungen oder deren Vorschaltgeräte hierzu sowohl mit einer eindeutigen Identifikation (ID) als auch mit einer Kategorisierung versehen, die über Typ und grobes Lastverhalten der jeweiligen Energieverbrauchseinrichtung Auskunft gibt. Beispielsweise kennen die Energieverbrauchseinrichtungen ihr Verhalten selbst; alternativ könnte das Vorschaltgerät, das zum Beispiel in der Steckdose untergebracht ist, entsprechend von außen einstellbar sein, um über die nachgeschaltete Energieverbrauchseinrichtung Auskunft zu geben, z. B. über einen Wahlschalter, mit dem man vorgegebene Einstellungen (z. B. "Kühlschrank", "Kühltruhe", "Heizung", "Waschmaschine", usw.) vornehmen kann, für die jeweils ein vorab definierte Parametersatz zwecks Weitergabe an die Energieverteileinrichtung definiert ist.

Bevorzugt wird für die Kommunikationsverbindung eine "sichere" bzw. abhörsichere Übertragungsart verwendet, bei der eine Ausspähung und Veränderung von Daten auf der Leitung verhindert wird. Beispielsweise sollte verhindert werden, dass Endkunden Einstellungen anderer Endkunden abfragen oder verändern können.

Im Übrigen wird es auch als vorteilhaft angesehen, wenn die Energieverteileinrichtungen nicht nur die Energie, beispielsweise den Strom, sondern zusätzlich weitere Angaben, beispielsweise zu Qualität, Preis, Lastsituation, etc. zu den Endkunden übermitteln. Technisch genutzt werden können hierzu z. B. WLAN Hot-Spotsanschlüsse, in der Stromzuführung integrierte Lichtwellenleiterkabel, PowerLine Carrier etc. Vorzugsweise werden standardisierte Kommunikationsverbindungen zu den Endverbrauchern eingerichtet. Auch besteht die Möglichkeit, zusätzliche, beispielsweise kostenfreie oder kostenpflichtige Dienstleistung anzubieten, zum Beispiel:
- Home security service
- Gebäudeüberwachung beispielsweise während der Urlaubszeit
- Prepaid service für säumige Kunden: Der Kunde zahlt im Voraus für eine bestimmte Energiemenge.
- Anzeige von Kenngrößen: Der Kunde kann Energiekenngrößen für einen vorgegebenen Zeitraum abfordern und mit einer geeigneten Anzeigesoftware darstellen, zum Beispiel den Energieverbrauch, die Energiequalität, Störschriebe, Energieträgeranteile (Atomstrom, Windkraft, Kohlekraft, etc.). Die Anzeige von wesentlichen Energiekenngrößen führt beim Endverbraucher zu einem sparsameren Umgang mit Energie und liefert damit einen Beitrag zum Umweltschutz. Viele Regierungen fördern Maßnahmen zur Energieeinsparung.
- Internetzugang

Die Energieversorger können die Kommunikationsinfrastruktur und die Basiskommunikationsdienste beispielsweise kostenfrei zur Verfügung stellen (disruptives Geschäftsmodell); damit würden die bisherigen Anbieter attackiert werden. Die Quersubventionierung würde beispielsweise über die Energiepreise und Zusatzdienste erfolgen. Diese Möglichkeiten der Finanzierung können die bisherigen Energieversorgungssysteme bisher nicht bieten.

Die Erfindung wird nachfolgend anhand von Ausführungsbeispielen näher erläutert; dabei zeigen beispielhaft
- Figur 1: ein Ausführungsbeispiel für eine Anordnung mit einer Energieverteileinrichtung, einer Mehrzahl an Energieverbrauchseinrichtungen sowie einem Energieversorgungsnetz,
- Figuren 2-10: verschiedene Verfahren zum Betreiben der Anordnung nach Figur 1,
- Figur 10: ein weiteres Ausführungsbeispiel für eine Anordnung mit einer Energieverteileinrichtung, einer Mehrzahl an Energieverbrauchseinrichtungen, einem Energieversorgungsnetz sowie einer Verwaltungseinrichtung und
- Figur 11: ein Ausführungsbeispiel für ein Vorschaltgerät für die Anordnungen gemäß den Figuren 1-10.

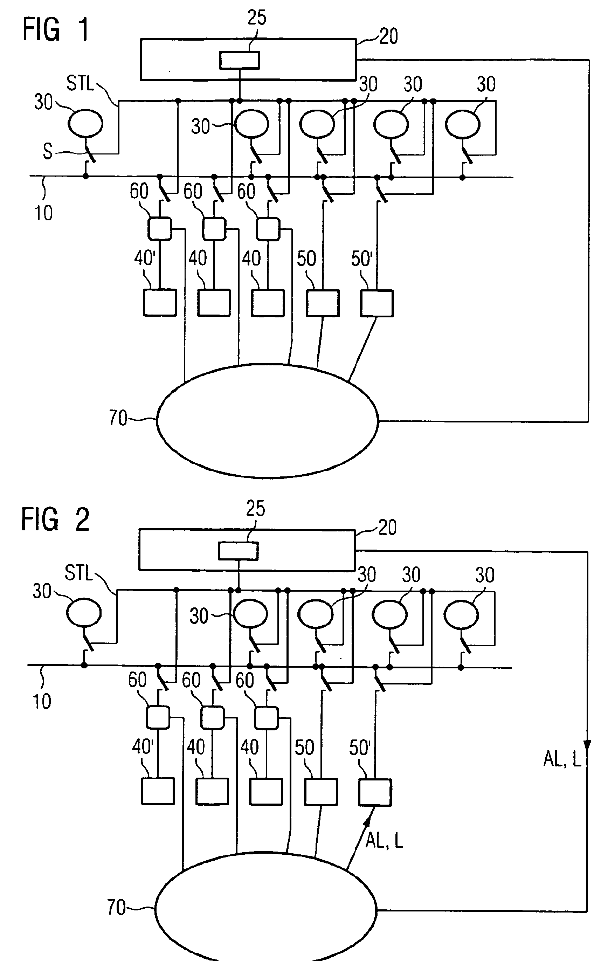

In den Figuren 1 bis 11 werden der Übersicht halber für identische oder vergleichbare Komponenten stets dieselben Bezugszeichen verwendet.

In der Figur 1 ist ein Energieversorgungsnetz 10 dargestellt, an das eine Energieverteileinrichtung 20 mit einer darin enthaltenen Datenverarbeitungsanlage 25, eine Mehrzahl an Energieerzeugungseinrichtungen 30 sowie Energieverbrauchseinrichtungen 40, 40', 50 und 50' angeschlossen sind. Die Verbrauchseinrichtungen 50, 50' sind unmittelbar an das Energieversorgungsnetz 10 angeschlossen, wohingegen die Energieverbrauchseinrichtungen 40, 40' mittelbar mit dem Energieversorgungsnetz 10 in Verbindung stehen, nämlich durch Vorschalteinrichtungen bzw. Vorschaltgeräte 60, die zwischen die Energieverbrauchseinrichtungen 40, 40' und das Energieversorgungsnetz 10 geschaltet sind.

Die Aufgabe der Energieverteileinrichtung 20 besteht darin, das Energieversorgungsnetz 10 so zu betreiben, dass die von den Energieerzeugungseinrichtungen 30 bereitgestellte Energie auch von den Energieverbrauchseinrichtungen 40, 40', 50 und 50' verbraucht wird, da nämlich ein Zwischenspeichern von elektrischer Energie sehr aufwendig und kostentreibend ist.

Zum Betreiben des Energieversorgungsnetzes 10 steht die Energieverteileinrichtung 20 mit einer Vielzahl an Messeinrichtungen, Schutzeinrichtungen sowie Schaltern in Verbindung, die in der Figur 1 nur schematisch dargestellt und mit dem Bezugszeichen S gekennzeichnet sind. Die Verbindung zwischen den Messeinrichtungen, den Schutzeinrichtungen sowie den Schaltern S beruht auf Steuerleitungen, die in der Figur 1 mit dem Bezugszeichen STL gekennzeichnet sind.

In der Figur 1 erkennt darüber hinaus eine Kommunikationseinrichtung 70, an die die Energieverteileinrichtung 20 sowie die Energieverbrauchseinrichtungen 40, 40', 50 und 50' angeschlossen sind. Die Energieverbrauchseinrichtungen 50, 50' sind dabei unmittelbar mit der Kommunikationseinrichtung 70 verbunden, wohingegen die Verbindung zwischen den Energieverbrauchseinrichtungen 40, 40' und der Kommunikationseinrichtung 70 über die Vorschaltgeräte 60 erfolgt.

Zum Betrieb des Energieversorgungsnetzes 10 wird die Energieverteileinrichtung 20 die jeweilige Netzlast des Energieversorgungsnetzes 10 zeitanhängig ermitteln und durch Einwirken auf die Energieerzeugungseinrichtungen 30 sowie durch Einwirken auf die Verbrauchseinrichtungen 40, 40, 50 und 50' versuchen, dynamische Netzlaständerungen möglichst gering zu halten und dafür zu sorgen, dass die durch die Energieerzeugungseinrichtungen 30 bereitgestellte Energie von den Energieverbrauchseinrichtungen 40, 40', 50 und 50' abgenommen wird.

Das Einwirken der Energieverteileinrichtung 20 auf die Energieverbrauchseinrichtungen 40, 40', 50 und 50' kann auf verschiedene Art und Weise erfolgen, wie nun nachfolgend anhand der Figuren 2 bis 10 näher erläutert wird.

In der Figur 2 ist ein Ausführungsbeispiel für das Betreiben der Anordnung gemäß Figur 1 bzw. für das Betreiben des Energieversorgungsnetzes 10 dargestellt, bei dem die Energieverteileinrichtung 20 in Abhängigkeit von der jeweils zeitabhängig erfassten Lastdynamik ihre Energielieferbedingungen verändert und anpasst und die jeweiligen Energielieferbedingungen an die Energieverbrauchseinrichtungen mittels der Kommunikationseinrichtung 70 übermittelt. In der Figur 2 sind die Energielieferbedingungen der Energieverteileinrichtung 20 mit dem Bezugszeichen L gekennzeichnet.

Die Energielieferbedingungen werden von der Energieverteileinrichtung 20 in Form eines Abgabesignals AL über die Kommunikationseinrichtung 70 beispielsweise zu der Energieverbrauchseinrichtung 50' übermittelt. Die Energieverbrauchseinrichtung 50' ist derart ausgestaltet, dass sie das empfangene Abgabesignal AL bzw. die darin enthaltenen Energielieferbedingungen L auswertet und mit ihren individuell abgespeicherten Energieabnahmebedingungen vergleicht. Stimmen die Energielieferbedingungen L sowie die Energieabnahmebedingungen der Energieverbrauchseinrichtung 50' überein, so wird sich die Energieverbrauchseinrichtung 50' einschalten und die von der Energieverteileinrichtung 20 angebotene Energie abnehmen. Andernfalls, wenn also die Lieferbedingungen L der Energieverteileinrichtung 20 von den Energieabnahmebedingungen der Energieverbrauchseinrichtung 50' abweichen, wird sich die Energieverbrauchseinrichtung 50' abschalten und die Annahme der angebotenen Energie ablehnen.

Die individuellen Energieabnahmebedingungen der Energieverbrauchseinrichtung 50' werden beispielsweise endkundenseitig, also von dem Eigentümer oder Betreiber der Energieverbrauchseinrichtung 50', vorgegeben und in die Energieverbrauchseinrichtung 50' eingegeben. Eine solche Eingabe der Energieabnahmebedingungen kann beispielsweise über einen PC erfolgen, wenn die Energieverbrauchseinrichtung eine entsprechende Schnittstelle aufweist, oder durch eine entsprechende Eingabevorrichtung an der Energieverbrauchseinrichtung 50'.

Stellt nun während des Betriebs des Energieversorgungsnetzes 10 die Energieverteileinrichtung 20 fest, dass die dynamische Netzlast bzw. Lastdynamik des Energieversorgungsnetzes zu groß ist und die Energieabnahme gebremst werden sollte, so wird sie die Lieferbedingungen entsprechend verändern, um die Energieabnahme durch die Energieverbrauchseinrichtung 50' unattraktiver zu machen. Beispielsweise wird die Energieverteileinrichtung 20 in den Energielieferbedingungen angeben, dass die Energiequalität nicht mehr in bisherigem Umfange sichergestellt werden kann oder dass die Herkunft der Energie nicht mehr gewährleistet werden kann. Beispielsweise kann die Energieverteileinrichtung 20 der Energieverbrauchseinrichtung 50' mitteilen, dass anstelle der sonst bereitgestellten umweltfreundlichen Energie (z. B. Solarenergie oder Windenergie) nur noch Atomstrom bereitgestellt werden kann. Auch kann die Energieverteileinrichtung 20 den Abgabepreis für die Energie deutlich erhöhen, so dass für die Energieverbrauchseinrichtung 50' eine Energieabnahme zu teuer wird und sie deshalb "freiwillig" auf eine Energieabnahme verzichtet.

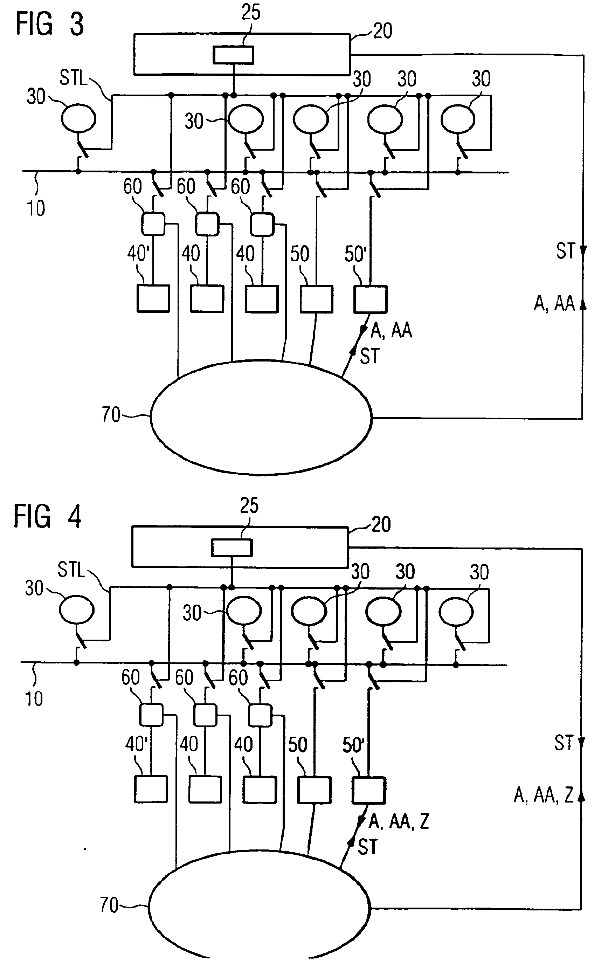

Im Zusammenhang mit der Figur 3 wird nun ein weiteres Ausführungsbeispiel zum Betreiben der Anordnung gemäß der Figur 1 gezeigt. Bei diesem Ausführungsbeispiel wird davon ausgegangen, dass die Energieverbrauchseinrichtung 50' die Steuerhoheit an die Energieverteileinrichtung 20 abgegeben hat: Dies bedeutet, dass das Ein- und Ausschalten der Energieverbrauchseinrichtung 50' ausschließlich von der Energieverteileinrichtung 20 übernommen wird. Hierzu übermittelt die Energieverbrauchseinrichtung 50' ihre gewünschten Energieabnahmebedingungen A in Form eines entsprechenden Signals AA über die Kommunikationseinrichtung 70 an die Energieverteileinrichtung 20. Die Energieverteileinrichtung 20 vergleicht die empfangenden Energieabnahmebedingungen A der Energieverbrauchseinrichtung 50' mit ihren jeweiligen Lieferbedingungen L und schaltet die Energieverbrauchseinrichtung 50' mit einem Steuersignal ST ein, wenn die Energielieferbedingungen L mit den Energieabnahmebedingungen A übereinstimmen und schaltet die Energieverbrauchseinrichtung 50' mit dem Steuersignal ST ab, wenn Lieferbedingungen und Abnahmebedingungen nicht korrelieren.

Bei dem Ausführungsbeispiel gemäß der Figur 4 wird beispielhaft davon ausgegangen, dass die Energieverbrauchseinrichtung 50' nicht nur ihre jeweiligen Energieabnahmebedingungen, sondern darüber hinaus auch eine Zeitspanne oder eine Zeitgrenze angibt, innerhalb derer oder bis zu der eine Energielieferung durch die Energieverteileinrichtung 20 bzw. durch das Energieversorgungsnetz 10 erfolgen soll. Die entsprechende Angabe Z wird von der Energieverbrauchseinrichtung 50' über die Kommunikationseinrichtung 70 an die Energieverteileinrichtung 20 übermittelt. Die Energieverteileinrichtung 20 wird bei dem Ein- und Ausschalten der Energieverbrauchseinrichtung 50' die entsprechende Zeitspanne oder Zeitgrenze ebenfalls berücksichtigen und die Energieverbrauchseinrichtung 50' auch dann einschalten, wenn die Energieabnahmebedingungen der Energieverbrauchseinrichtung 50 nicht mit den Energielieferbedingungen L der Energieverteileinrichtung 20 übereinstimmen, vorzugsweise jedoch nur dann, wenn die Abweichungen innerhalb eines vorgegebenen bzw. zulässigen Rahmens liegen, der vorab endkundenseitig vorgegeben ist oder von der Energieverbrauchseinrichtung 50' ebenfalls an die Energieverteileinrichtung 20 übermittelt wird.

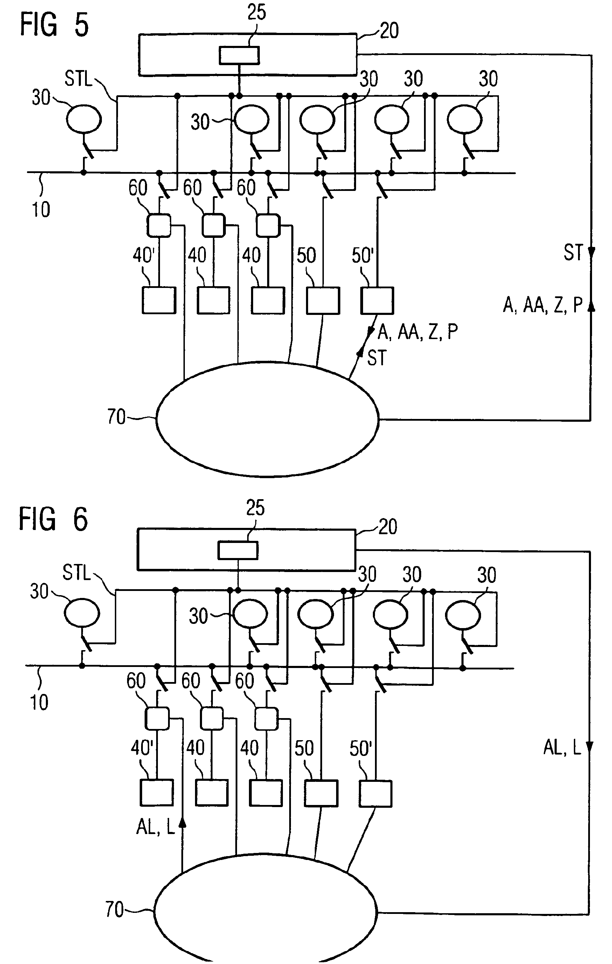

In der Figur 5 ist ein weiteres Ausführungsbeispiel zum Betrieb der Anordnung gemäß Figur 1 dargestellt. Im Unterschied zu dem Ausführungsbeispiel gemäß Figur 4 ist die Energieverbrauchseinrichtung 50' derart ausgestaltet, dass sie neben ihren Energieabnahmebedingungen A auch eine Gerätetypangabe P bzw. einen der Gerätetypangabe entsprechenden Parametersatz P über die Kommunikationseinrichtung 70 an die Energieverteileinrichtung 20 überträgt. Die Gerätetypangabe bzw. der Parametersatz P gibt beispielsweise an, um welche Art Energieverbrauchseinrichtung es sich konkret handelt. Beispielsweise kann die Energieverbrauchseinrichtung 50' übermitteln, dass es sich bei dieser um einen Kühlschrank oder eine Kühltruhe, oder dergleichen handelt und wie die Leistungskurven des Geräts aussehen.

Durch die zusätzliche Information, um welche Art Energieverbrauchseinrichtung es sich bei der Energieverbrauchseinrichtung 50' handelt, ist die Energieverteileinrichtung 20 noch besser in der Lage, die dynamische Netzlast bzw. Lastdynamik im Energieversorgungsnetz 10 zu reduzieren, in dem sie nämlich gezielt die Energieverbrauchseinrichtung 50' nur dann einschaltet, wenn die Netzlast im Energieversorgungsnetz 10 für die jeweilige Geräteart ausreichend gering ist. Darüber hinaus ermöglicht es die Gerätetypangabe, die Energieverbrauchseinrichtung 50' als eine Art Energiepuffer bzw. Speicher zu verwenden: Handelt es sich beispielsweise bei der Energieverbrauchseinrichtung 50' um eine Kühltruhe, so kann die Energieverteileinrichtung 20 bei einem prognostizierten Lastanstieg bereits vor Eintritt dieses Lastanstiegs die Energieverbrauchseinrichtung 50' einschalten, um die Kühleinrichtung abzukühlen, damit nach erfolgtem Lasteintritt die Kühleinrichtung 50' wieder ausgeschaltet werden kann. Dadurch wird eine relativ gleichmäßige Auslastung des Energieversorgungsnetzes 10 gewährleistet.

Im Zusammenhang mit der Figur 6 wird nun beispielhaft erläutert, wie die Energieverbrauchseinrichtung 40' gemäß Figur 1 betrieben werden kann. Bei der Energieverbrauchseinrichtung 40' handelt es sich beispielsweise um eine Energieverbrauchseinrichtung, die selbst nicht in der Lage ist, mit der Kommunikationseinrichtung 70 bzw. der Energieverteileinrichtung 20 zu kommunizieren. Aus diesem Grunde ist die Energieverbrauchseinrichtung 40' über das Vorschaltgerät 60 sowohl mit dem Energieversorgungsnetz 10 als auch mit der Kommunikationseinrichtung 70 verbunden. Die Steuerung der Energieverbrauchseinrichtung 40' erfolgt somit über das Vorschaltgerät 60. Das Vorschaltgerät 60 kann beispielsweise Lieferbedingungen L der Energieverteileinrichtung 20 empfangen und mit in dem Vorschaltgerät 60 abgespeicherten Energieabnahmebedingungen vergleichen. Stimmen die Energieabnahmebedingungen mit den Energielieferbedingungen überein, so wird das Vorschaltgerät 60 die Energieverbrauchseinrichtung 40' einschalten und andernfalls abschalten.

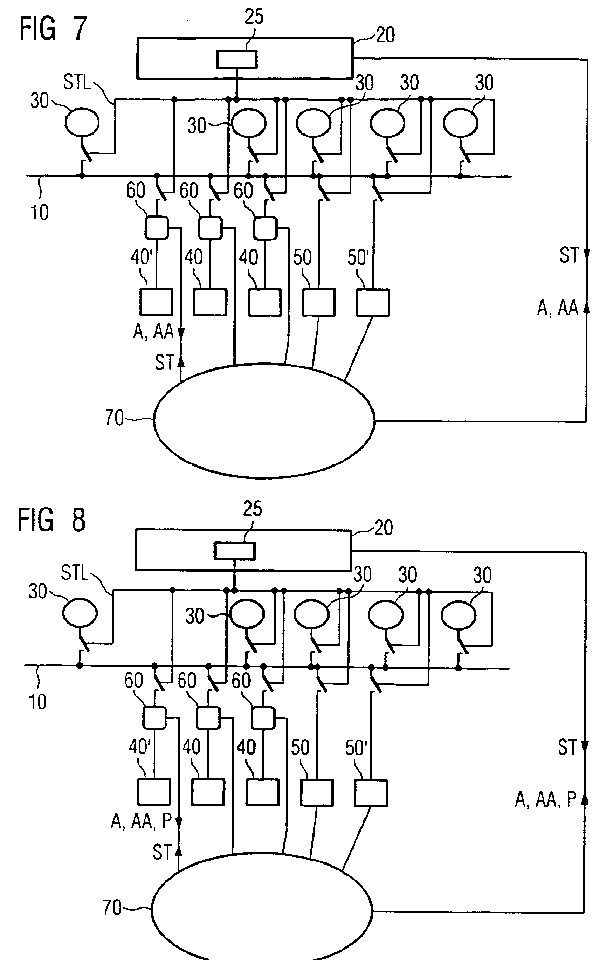

Bei dem Ausführungsbeispiel gemäß der Figur 7 überträgt das Vorschaltgerät 60 die Energieabnahmebedingungen A der Energieverbrauchseinrichtung 40' über die Kommunikationseinrichtung 70 zu der Energieverteileinrichtung 20. Die Steuerhoheit sowohl über das Vorschaltgerät 60 als auch über die Energieverbrauchseinrichtung 40' liegt bei der Energieverteileinrichtung 20. Diese vergleicht ihre Energielieferbedingungen L mit den Energieabnahmebedingungen A der Energieverbrauchseinrichtung 40' und schaltet die Energieverbrauchseinrichtung 40' über das Vorschaltgerät 60 mit dem Steuersignal ST ein, wenn sich Lieferbedingungen und Abnahmebedingungen entsprechen; stimmen diese nicht überein, so wird die Energieverbrauchseinrichtung 40' von der Energieverteileinrichtung 20 mit dem Steuersignal ST abgeschaltet.

Im Zusammenhang mit der Figur 8 wird nun beispielhaft eine weitere Betriebsart des Vorschaltgeräts 60 erläutert. Bei dieser Betriebsart übermittelt das Vorschaltgerät 60 eine Gerätetypangabe P bzw. einen die Energieverbrauchseinrichtung 40' beschreibenden Parametersatz P an die Energieverteileinrichtung 20, so dass diese das elektrische Verhalten der Energieverbrauchseinrichtung 40' kennt. Dies ermöglicht der Energieverteileinrichtung 20, die Energieverbrauchseinrichtung 40' zu geeigneten Zeiten ein- und auszuschalten, um Netzlastschwankungen im Energieversorgungsnetz 10 in akzeptablen Bereichen zu halten.

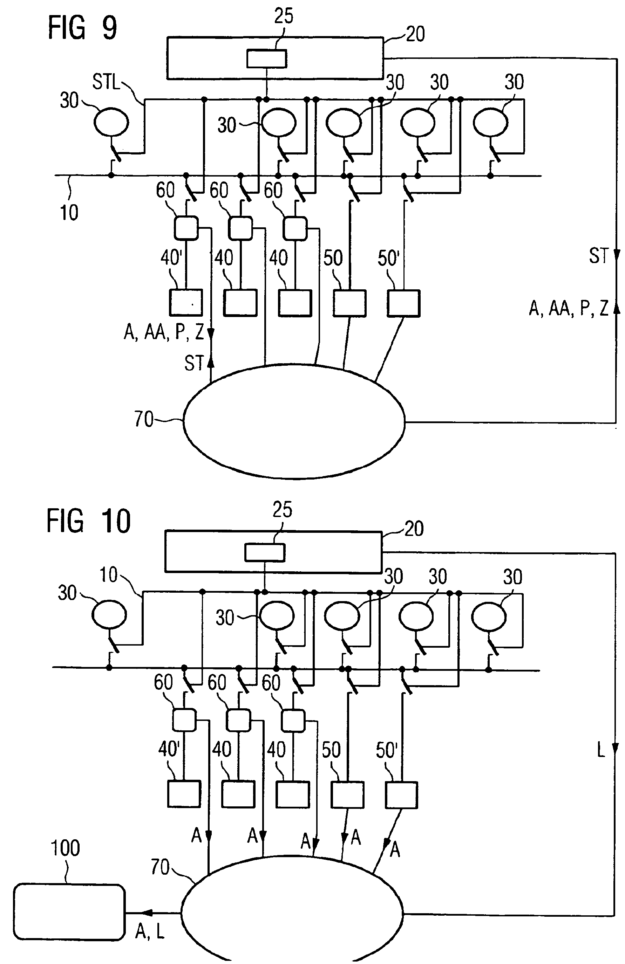

Im Zusammenhang mit der Figur 9 wird nun beispielhaft eine Betriebsart des Vorschaltgerätes 60 erläutert, bei der dieses zusätzlich zu den Energieabnahmebedingungen A und der Gerätetypangabe P auch eine Zeitspanne oder eine Zeitgrenze Z angibt, innerhalb derer oder bis zu der eine Energielieferung durch die Energieverteileinrichtung 20 erfolgen soll. Die Energieverteileinrichtung 20 hat somit einen weiteren Parameter zu berücksichtigen, wenn es die Energieverbrauchseinrichtung 40' steuert.

In der Figur 10 ist ein weiteres Ausführungsbeispiel für eine Anordnung mit einem Energieversorgungsnetz 10, einer Energieverteileinrichtung 20, einer Energieerzeugungseinrichtung 30 sowie Energieverbrauchseinrichtungen 40, 40', 50 und 50' dargestellt. Im Unterschied zu dem Ausführungsbeispiel gemäß Figur 1 ist bei diesem Ausführungsbeispiel zusätzlich eine Verwaltungseinrichtung in Form eines Tradingssystems vorgesehen, das in der Figur 10 mit dem Bezugszeichen 100 gekennzeichnet ist. Die Aufgabe der Verwaltungseinrichtung 100 besteht darin, die Energielieferbedingungen der an das Energieversorgungsnetz 10 angeschlossenen Energieverteileinrichtung 20 zu speichern. Die Energieverbrauchseinrichtungen 50 und 50' und die Vorschaltgeräte 60 können über die Kommunikationseinrichtung 70 auf die Verwaltungseinrichtung 100 und auf die darin gespeicherten Daten zugreifen und Tarifoptionen auswählen, nach denen sie Energie vom Energieversorgungsnetz 10 beziehen wollen. Die entsprechenden Angaben können die Energieverbrauchseinrichtungen 50, 50' sowie die Vorschaltgeräte 60 dazu verwenden, Energieabnahmebedingungen A zu generieren, um diese an die Verwaltungseinrichtung 100 oder unmittelbar an die Energieverteileinrichtung 20 zwecks Energieabnahme zu übersenden.

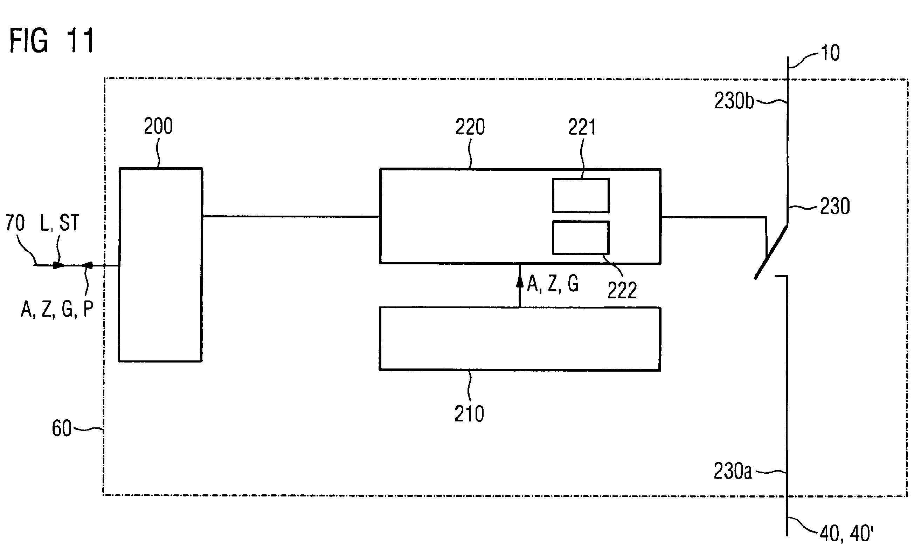

In der Figur 11 ist ein Ausführungsbeispiel für ein Vorschaltgerät 60 für die Anordnungen gemäß den Figuren 1 bis 10 dargestellt.

Man erkennt in der Figur 11 eine Kommunikationsschnittstelle 200 zur Kommunikation mit einer an eine Kommunikationseinrichtung 70 angeschlossenen Energieverteileinrichtung und/oder zur Kommunikation mit einer Verwaltungseinrichtung. Über die Kommunikationsschnittstelle 200 kann das Vorschaltgerät 60 Energielieferbedingungen L und Steuersignale ST der Energieverteileinrichtung 20 empfangen sowie eigene Energieabnahmebedingungen A, Gerätetypangaben G oder Geräteparameter P und Zeitvorgaben Z an die Kommunikationseinrichtung 70 absenden. Außerdem ist eine Eingabeeinrichtung 210 zur verbraucherseitigen Eingabe von Energieabnahmebedingungen A, Gerätetypangaben G und Zeitvorgaben Z vorhanden.

Mit der Kommunikationsschnittstelle 200 und der Eingabeeinrichtung 210 steht eine Steuereinrichtung 220 in Verbindung, die beispielsweise eine DV-Anlage 221 und einen Speicher 222 aufweist und die verbraucherseitigen Energieabnahmebedingungen A beispielsweise mit von der Energieverteileinrichtung oder der Verwaltungseinrichtung empfangenen Energielieferbedingungen L vergleichen kann.

Ein mit der Steuereinrichtung 220 verbundener Schalter 230 weist einen Schalteranschluss 230a auf, mit dem der Schalter elektrisch an eine Energieverbrauchseinrichtung 40, 40' anschließbar ist. Mit einem Schalteranschluss 230b ist der Schalter 230 elektrisch an das Energieversorgungsnetz 10 anschließbar.

In einer bevorzugten Betriebsart des Vorschaltgeräts 60 wird der Schalter 230 von der Steuereinrichtung 220 eingeschaltet, wenn die verbraucherseitigen Energieabnahmebedingungen A den empfangenen Energielieferbedingungen L entsprechen, und von der Steuereinrichtung 220 ausgeschaltet, wenn die verbraucherseitigen Energieabnahmebedingungen A von den empfangenen Energielieferbedingungen L abweichen.

In einer anderen bevorzugten Betriebsart des Vorschaltgeräts 60 wird der Schalter 230 von der Steuereinrichtung 220 eingeschaltet, wenn ein entsprechendes Steuersignal ST von der Energieverteileinrichtung empfangen wird.

## Patentansprüche

1. Verfahren zum Betreiben einer Anordnung mit zumindest einer Energieverteileinrichtung (20), einer Mehrzahl an Energieverbrauchseinrichtungen (30) und einem Energieversorgungsnetz (10), an das die zumindest eine Energieverteileinrichtung und die Mehrzahl an Energieverbrauchseinrichtungen angeschlossen sind, wobei
- die Energieverbrauchseinrichtungen und die Energieverteileinrichtung über eine Kommunikationseinrichtung (70) mittelbar oder unmittelbar in Verbindung stehen,
- die Energieverteileinrichtung (20) Energielieferbedingungen (L) in Abhängigkeit von der jeweiligen Netzlast oder Netzlastschwankungen des Energieversorgungsnetzes zeitabhängig ermittelt und
- den Energieverbrauchseinrichtungen gemäß deren individuell abgespeicherten Energieabnahmebedingungen (A) individuell Energie bereitgestellt wird oder nicht, indem
- die Energieverteileinrichtung (20) die Energielieferbedingungen anpasst,
wobei die Energielieferbedingungen derart angepasst werden,
- dass bei einem Überangebot elektrischer Energie im Energieversorgungsnetz (10) eine Energielieferung für die Energieverbrauchseinrichtungen (30) attraktiver gemacht wird und bei absehbarem oder bereits aufgetretenem Mangel an elektrischer Energie im Energieversorgungsnetz (10) eine Energielieferung für die Energieverbrauchseinrichtung (30) erschwert bzw. unattraktiv gemacht wird, wobei die Energieabnahmebedingungen (A) und die Energielieferbedingungen (L) zumindest einen der nachfolgend aufgeführten Parameter enthalten:
- Mindestqualität der Energie, insbesondere hinsichtlich der Mindestfrequenzstabilität der gelieferten elektrischen Spannung, der maximalen 5pannungsschwankung der gelieferten elektrischen Spannung und/oder einem maximalen Maß an Oberwellen in der gelieferten elektrischen Spannung,
- maximaler Ausstoß an Kohlendioxid pro gelieferter Kilowattstunde,
- Art der Energieerzeugung,
- Preis oder Preisindikator,
**dadurch gekennzeichnet,**
- **dass** die Energieverteileinrichtung (20) die jeweilige Netzlast des Energieversorgungsnetzes (10) durch Messen der Netzlast zeitabhängig ermittelt,
- **dass** die Energieverteileinrichtung ein ihre jeweiligen Energielieferbedingungen angebendes Abgabesignal (AL) erzeugt und dieses über die Kommunikationseinrichtung an die Energieverbrauchseinrichtungen sendet,
- **dass** zumindest eine der Energieverbrauchseinrichtungen individuell prüft, ob die mit dem Abgabesignal empfangenen Energielieferbedingungen mit ihren individuell abgespeicherten Energieabnahmebedingungen übereinstimmen, und im Falle einer Übereinstimmung zwischen Energielieferbedingungen und Energieabnahmebedingungen die angebotene Energie zu den empfangenen Energielieferbedingungen abnimmt und andernfalls ablehnt, und
- **dass** die Energieverteileinrichtung von einer Steuereinrichtung der Energieverbrauchseinrichtung den voraussichtlichen Energiebedarf der nachgeschalteten Energieverbrauchseinrichtung empfängt.

2. Verfahren nach Anspruch 1,
**dadurch gekennzeichnet,**
- **dass** zumindest eine der Energieverbrauchseinrichtungen ihre individuell abgespeicherten Energieabnahmebedingungen an die Energieverteileinrichtung über die Kommunikationseinrichtung übermittelt und die Energieverteileinrichtung die Energieabnahme dieser Energieverbrauchseinrichtung anschließend durch ein individuelles Steuersignal (ST) steuert.

3. Verfahren nach Anspruch 2,
**dadurch gekennzeichnet,**
- **dass** die Energieverteileinrichtung die Energieabnahme durch das Steuersignal derart steuert, dass die Energieverbrauchseinrichtung von der Energieverteileinrichtung eingeschaltet wird, wenn die Energielieferbedingungen mit den Energieabnahmebedingungen übereinstimmen, und andernfalls abgeschaltet wird oder bleibt, oder
- **dass** die Energieverteileinrichtung die Energieabnahme der Energieverbrauchseinrichtung durch das Steuersignal stufenlos regelt.

4. Verfahren nach Anspruch 3,
**dadurch gekennzeichnet,**
- **dass** eine an die Kommunikationseinrichtung angeschlossene Verwaltungseinrichtung (100) die Energielieferbedingungen der an das Energieversorgungsnetz angeschlossenen Energieverteileinrichtung speichert und
- **dass** zumindest eine Energieverbrauchseinrichtung jeweils die in der Verwaltungseinrichtung abgespeicherten Energielieferbedingungen mit ihren individuell abgespeicherten Energieabnahmebedingungen vergleicht und im Falle einer Übereinstimmung die Energie von dem Energieversorgungsnetz abnimmt und andernfalls ablehnt.

5. Vorschaltgerät (60) zum Anschließen einer Energieverbrauchseinrichtung an ein Energieversorgungsnetz mit
- einer Kommunikationsschnittstelle (200) zur Kommunikation mit einer Kommunikationseinrichtung (70),
- einer Eingabeeinrichtung (210) zur verbraucherseitigen Eingabe von Energieabnahmebedingungen (A),
- einer mit der Kommunikationsschnittstelle und der Eingabeeinrichtung in Verbindung stehenden Steuereinrichtung (220), die die verbraucherseitigen Energieabnahmebedingungen mit von der Kommunikationseinrichtung (70) empfangenen Energielieferbedingungen (L) vergleicht, und
- einem mit der Steuereinrichtung verbundenen Schalter (230), der elektrisch zwischen die Energieverbrauchseinrichtung und das Energieversorgungsnetz schaltbar ist und der von der Steuereinrichtung eingeschaltet wird, wenn die verbraucherseitigen Energieabnahmebedingungen den empfangenen Energielieferbedingungen entsprechen, und der von der Steuereinrichtung ausgeschaltet wird, wenn die verbraucherseitigen Energieabnahmebedingungen von den empfangenen Energielieferbedingungen abweichen,
**dadurch gekennzeichnet, dass**
die Steuereinrichtung in einen Betriebsmodus schaltbar ist, bei dem die Steuerungshoheit über den Schalter des Vorschaltgeräts einer Energieverteileinrichtung zum Betrieb des Energieversorgungsnetzes derart übertragen ist, dass die Energieverteileinrichtung den Schalter mittels eines individuellen Steuersignals (ST) selbsttätig ein- und ausschalten kann, und dass
die Steuereinrichtung dazu eingerichtet ist, in dem genannten Betriebsmodus oder in einem anderen Betriebsmodus den voraussichtlichen Energiebedarf der nachgeschalteten Energieverbrauchseinrichtung an die Energieverteileinrichtung zu übermitteln.

6. Vorschaltgerät nach Anspruch 5,
**dadurch gekennzeichnet, dass**
- in das Vorschaltgerät benutzerseitig eine Zeitspanne oder eine Zeitgrenze (Z), innerhalb derer oder bis zu der eine Energielieferung erfolgen soll, eingebbar ist und
- die Steuereinrichtung geeignet ist, die Zeitspanne oder die Zeitgrenze an die Energieverteileinrichtung zu übermitteln.

7. Vorschaltgerät nach Anspruch 5 oder 6,
**dadurch gekennzeichnet, dass**
die Steuereinrichtung geeignet ist, zumindest einen internen Messwert oder zumindest eine Verbrauchskenngröße der Energieverbrauchseinrichtung selbst zu ermitteln und diese an die Energieverteileinrichtung zu übertragen.

8. Vorschaltgerät nach Anspruch 7,
**dadurch gekennzeichnet, dass**
die zumindest eine Verbrauchskenngröße den Maximalverbrauch, die Verbrauchsdauer und/oder die Verbrauchshäufigkeit der Energieverbrauchseinrichtung angibt.

9. Vorschaltgerät nach einem der voranstehenden Ansprüche 5 bis 8,
**dadurch gekennzeichnet, dass**
- das Vorschaltgerät eine benutzerseitige Eingabe einer die Energieverbrauchseinrichtung beschreibenden Gerätetypangabe ermöglicht und
- die Steuereinrichtung derart ausgestaltet ist, dass sie im Falle einer Eingabe der Gerätetypangabe (G) einen der jeweiligen Gerätetypangabe zugeordneten Parametersatz (P) an die Energieverteileinrichtung weiterleitet.

10. Vorschaltgerät nach Anspruch 9,
**dadurch gekennzeichnet,**
- **dass** die Steuereinrichtung einen Speicher (222) aufweist, in dem für eine vorgegebene Anzahl an Gerätetypen (G) jeweils ein Parametersatz (P) zwecks Weitergabe an die Energieverteileinrichtung abgespeichert ist und
- **dass** die Steuereinrichtung im Falle einer benutzerseitigen Eingabe einer Gerätetypangabe (G) den jeweils passenden Parametersatz (P) an die Energieverteileinrichtung weiterleitet.

11. Vorschaltgerät nach Anspruch 10 oder 11,
**dadurch gekennzeichnet, dass**
der Parametersatz zumindest eine Verbrauchskenngröße der Energieverbrauchseinrichtung, insbesondere den Maximalverbrauch, die Verbrauchsdauer und/oder die Verbrauchshäufigkeit der Energieverbrauchseinrichtung angibt.

12. Vorschaltgerät nach einem der voranstehenden Ansprüche 5 bis 11,
**dadurch gekennzeichnet, dass**
das Vorschaltgerät baulich mit der Energieverbrauchseinrichtung verbunden oder in diese integriert ist.

## Claims

1. Method for operating an arrangement having at least one energy distribution device (20), a plurality of energy consumption devices (30) and an energy supply network (10), to which the at least one energy distribution device and the plurality of energy consumption devices are connected,
- the energy consumption devices and the energy distribution device being connected directly or indirectly via a communication device (70),
- the energy distribution device (20) determining energy supply conditions (L) on the basis of the respective network load or network load fluctuations of the energy supply network in a time-dependent manner, and
- energy being individually provided or not being provided to the energy consumption devices according to their individually stored energy use conditions (A) by virtue of
- the energy distribution device (20) adjusting the energy supply conditions,
the energy supply conditions being adjusted in such a manner that
- if there is an excess supply of electrical energy in the energy supply network (10), energy supply is made more attractive for the energy consumption devices (30) and, if there is a foreseeable lack or there is already a lack of electrical energy in the energy supply network (10), energy supply is made more difficult or unattractive for the energy consumption device (30), the energy use conditions (A) and the energy supply conditions (L) containing at least one of the parameters cited below:
- minimum quality of the energy, in particular with regard to the minimum frequency stability of the electrical voltage supplied, the maximum voltage fluctuation of the electrical voltage supplied and/or a maximum amount of harmonics in the electrical voltage supplied,
- maximum emission of carbon dioxide for each kilowatt hour supplied,
- type of energy generation,
- price or price indicator,
**characterized**
- **in that** the energy distribution device (20) determines the respective network load of the energy supply network (10) by measuring the network load in a time-dependent manner,
- **in that** the energy distribution device generates an emission signal (AL) indicating its respective energy supply conditions and transmits this signal to the energy consumption devices via the communication device,
- **in that** at least one of the energy consumption devices individually checks whether the energy supply conditions received with the emission signal match its individually stored energy use conditions and, if the energy supply conditions and the energy use conditions match, uses the energy offered for the received energy supply conditions and otherwise rejects it, and
- **in that** the energy distribution device receives the likely energy requirement of the downstream energy consumption device from a control device of the energy consumption device.

2. Method according to Claim 1,
**characterized**
- **in that** at least one of the energy consumption devices transmits its individually stored energy use conditions to the energy distribution device via the communication device, and the energy distribution device then controls the energy use of this energy consumption device by means of an individual control signal (ST).

3. Method according to Claim 2,
**characterized**
- **in that** the energy distribution device controls the energy use by means of the control signal in such a manner that the energy consumption device is switched on by the energy distribution device when the energy supply conditions match the energy use conditions and otherwise is or remains switched off, or
- **in that** the energy distribution device regulates the energy use of the energy consumption device in an infinitely variable manner by means of the control signal.

4. Method according to Claim 3,
**characterized**
- **in that** a management device (100) connected to the communication device stores the energy supply conditions of the energy distribution device connected to the energy supply network, and
- **in that** at least one energy consumption device respectively compares the energy supply conditions stored in the management device with its individually stored energy use conditions and, if there is a match, uses the energy from the energy supply network and otherwise rejects it.

5. Ballast (60) for connecting an energy consumption device to an energy supply network, having
- a communication interface (200) for communicating with a communication device (70),
- an input device (210) for inputting energy use conditions (A) on the consumer side,
- a control device (220) which is connected to the communication interface and to the input device and compares the energy use conditions on the consumer side with energy supply conditions (L) received from the communication device (70), and
- a switch (230) which is connected to the control device and can be electrically connected between the energy consumption device and the energy supply network, which switch is switched on by the control device if the energy use conditions on the consumer side correspond to the received energy supply conditions and is switched off by the control device if the energy use conditions on the consumer side differ from the received energy supply conditions,
**characterized in that**
the control device can be switched to an operating mode in which the control authority for the switch of the ballast is transferred to an energy distribution device for operating the energy supply network in such a manner that the energy distribution device can automatically switch the switch on and off using an individual control signal (ST), and **in that** the control device is set up to transmit the likely energy requirement of the downstream energy consumption device to the energy distribution device in said operating mode or in another operating mode.

6. Ballast according to Claim 5,
**characterized in that**
- a period of time or a time limit (Z), within which or up to which energy is intended to be supplied, can be input to the ballast on the user side, and
- the control device is suitable for transmitting the period of time or the time limit to the energy distribution device.

7. Ballast according to Claim 5 or 6,
**characterized in that**
the control device is suitable for determining at least one internal measured value or at least one consumption characteristic variable of the energy consumption device itself and for transmitting this to the energy distribution device.

8. Ballast according to Claim 7,
**characterized in that**
the at least one consumption characteristic variable indicates the maximum consumption, the consumption duration and/or the consumption frequency of the energy consumption device.

9. Ballast according to one of the preceding Claims 5 to 8, **characterized in that**
- the ballast makes it possible to input a device type specification describing the energy consumption device on the user side, and
- the control device is configured in such a manner that, if the device type specification (G) is input, it forwards a parameter set (P) assigned to the respective device type specification to the energy distribution device.

10. Ballast according to Claim 9,
**characterized**
- **in that** the control device has a memory (222) which respectively stores a parameter set (P) for a predefined number of device types (G) for the purpose of forwarding to the energy distribution device, and
- **in that**, if a device type specification (G) is input on the user side, the control device forwards the respective appropriate parameter set (P) to the energy distribution device.

11. Ballast according to Claim 10 or 11,
**characterized in that**
the parameter set indicates at least one consumption characteristic variable of the energy consumption device, in particular the maximum consumption, the consumption duration and/or the consumption frequency of the energy consumption device.

12. Ballast according to one of the preceding Claims 5 to 11,
**characterized in that**
the ballast is structurally connected to the energy consumption device or is integrated in the latter.

## Revendications

1. Procédé pour faire fonctionner un agencement ayant au moins un dispositif (20) répartiteur d'énergie, une multiplicité de dispositifs (30) consommateurs d'énergie et un réseau (10) d'alimentation en énergie, auquel le au moins un dispositif répartiteur d'énergie et la pluralité de dispositifs consommateurs d'énergie sont raccordés, dans lequel
- les dispositifs consommateurs d'énergie et le dispositif répartiteur d'énergie sont en liaison directement ou indirectement par un dispositif (70) de communication,
- le dispositif (20) répartiteur d'énergie détermine, en fonction du temps, des conditions (L) de fourniture d'énergie en fonction de la charge respective ou des fluctuations de charge respectives du réseau d'alimentation en énergie et
- on met ou non de l'énergie à disposition individuellement des dispositifs consommateurs d'énergie suivant leurs conditions (A) de réception d'énergie mémorisées individuellement, par le fait que
- le dispositif (20) répartiteur d'énergie adapte les conditions de fourniture d'énergie,
- dans lequel on adapte les conditions de fourniture d'énergie de manière à rendre, s'il y a une offre excédentaire d'énergie électrique dans le réseau (10) d'alimentation en énergie, attrayante, pour les dispositifs (30) consommateurs d'énergie, une fourniture d'énergie et à rendre, s'il y a un manque prévisible ou déjà apparu d'énergie électrique dans le réseau (10) d'alimentation en énergie, plus difficile ou peu attrayante, pour les dispositifs (30) consommateurs d'énergie, une fourniture d'énergie, les conditions (A) d'acceptation d'énergie et les conditions (L) de fourniture d'énergie contenant au moins l'un des paramètres mentionnés ci-après :
- qualité minimum de l'énergie, notamment en ce qui concerne la stabilité de fréquence minimum de la tension électrique fournie, la fluctuation maximum de la tension électrique fournie et/ou un maximum d'harmoniques dans la tension électrique fournie,
- rejet maximum de dioxyde de carbone par kilowatt-heure fourni,
- type de production d'énergie,
- prix ou indicateur de prix,
**caractérisé**
- **en ce que** le dispositif (20) répartiteur d'énergie détermine, en fonction du temps, la charge du réseau (10) d'alimentation en énergie en mesurant la charge du réseau,
- **en ce que** le dispositif répartiteur d'énergie produit un signal (AL) de fourniture indiquant ses conditions de fourniture d'énergie et l'envoie aux dispositifs consommateurs d'énergie par le dispositif de communication,
- **en ce qu'**au moins l'un des dispositifs consommateurs d'énergie contrôle individuellement si les conditions d'énergie reçues par le signal de fourniture coïncident avec ses conditions de réception d'énergie mémorisées individuellement et, s'il y a coïncidence entre les conditions de fourniture d'énergie et les conditions de réception d'énergie, reçoit l'énergie offerte aux conditions de fourniture d'énergie reçues et, sinon, décline l'offre et
- **en ce que** le dispositif répartiteur d'énergie reçoit, d'un dispositif de commande du dispositif consommateur d'énergie, le besoin d'énergie prévisible du dispositif consommateur d'énergie monté en aval.

2. Procédé suivant la revendication 1,
**caractérisé**
- **en ce qu'**au moins l'un des dispositifs consommateurs d'énergie transmet, par le dispositif de communication, ses conditions de réception d'énergie mémorisées individuellement au dispositif répartiteur d'énergie et le dispositif répartiteur d'énergie commande ensuite, par un signal (ST) de commande individuel, la réception d'énergie de ce dispositif consommateur d'énergie.

3. Procédé suivant la revendication 2,
**caractérisé**
- **en ce que** le dispositif répartiteur d'énergie commande, par le signal de commande, la réception d'énergie, de manière à ce que le dispositif consommateur d'énergie soit branché par le dispositif répartiteur d'énergie et, sinon, est débranché ou reste débranché ou
- **en ce que** le dispositif répartiteur d'énergie régule en continu, par le signal de commande, la réception d'énergie du dispositif de consommateur d'énergie.

4. Procédé suivant la revendication 3,
**caractérisé**
- **en ce qu'**un dispositif (100) de gestion relié au dispositif de communication mémorise des conditions de fourniture d'énergie du dispositif répartiteur d'énergie raccordé au réseau d'alimentation en énergie et
- **en ce qu'**au moins un dispositif consommateur d'énergie compare les conditions de fourniture d'énergie mémorisées dans le dispositif de gestion à ses conditions de réception d'énergie mémorisées individuellement et, s'il y a coïncidence, reçoit l'énergie du réseau d'alimentation en énergie et, sinon, refuse de le faire.

5. Ballast (60) pour raccorder un dispositif consommateur d'énergie à un réseau d'alimentation en énergie, comprenant
- une interface (200) de communication pour communiquer avec un dispositif (70) de communication,
- un dispositif (210) d'entrée pour l'entrée du côté du consommateur de conditions (A) de réception d'énergie,
- un dispositif (220) de commande, qui est en liaison avec l'interface de communication et avec le dispositif d'entrée et qui compare les conditions de réception d'énergie du côté du consommateur avec les conditions (L) de fourniture d'énergie reçues du dispositif (70) de communication et
- un interrupteur (230), qui est relié au dispositif de commande, qui peut être monté électriquement entre le dispositif consommateur d'énergie et le réseau d'alimentation en énergie et qui est fermé par le dispositif de commande, si les conditions de réception d'énergie du côté du consommateur correspondent aux conditions de fourniture d'énergie reçues, et qui est ouvert par le dispositif de commande, si les conditions de réception d'énergie du côté du consommateur s'écartent des conditions de fourniture d'énergie reçues,
**caractérisé en ce que**
le dispositif de commande peut être mis dans un mode de fonctionnement, dans lequel la hauteur de commande peut être transmise pour faire fonctionner le réseau d'alimentation en énergie par l'interrupteur du ballast à un dispositif répartiteur d'énergie, de manière à ce que le dispositif répartiteur d'énergie puisse ouvrir et fermer automatiquement l'interrupteur au moyen d'un signal (ST) de commande individuel et **en ce que**
le dispositif de commande est conçu pour transmettre, au dispositif répartiteur d'énergie, dans le mode de fonctionnement mentionné ou dans un autre mode de fonctionnement, le besoin d'énergie prévisible du dispositif consommateur d'énergie monté en aval.

6. Ballast suivant la revendication 5,
**caractérisé en ce que**
- il peut être entré, dans le ballast du côté de l'utilisateur, un laps de temps ou une limite (Z) de temps, dans lequel ou jusqu'à laquelle une fourniture d'énergie doit s'effectuer et
- le dispositif de commande est propre à transmettre le laps de temps ou la limite de temps au dispositif répartiteur d'énergie.

7. Ballast suivant la revendication 5 ou 6,
**caractérisé en ce que**
le dispositif de commande est propre à déterminer soi-même au moins une valeur de mesure interne ou au moins une grandeur caractéristique de consommation du dispositif consommateur d'énergie et à la transmettre au dispositif répartiteur d'énergie.

8. Ballast suivant la revendication 7,
**caractérisé en ce que**
la au moins une grandeur caractéristique de consommation indique la consommation maximum, la durée de consommation et/ou la fréquence de consommation du dispositif consommateur d'énergie.

9. Ballast suivant l'une des revendications précédentes 5 à 8, **caractérisé en ce que**
- le ballast permet d'entrer, du côté de l'utilisateur, une indication de type d'appareil décrivant le dispositif consommateur d'énergie et
- le dispositif de commande est constitué de manière à acheminer, dans le cas d'une entrée de l'indication (G) du type d'appareil au dispositif répartiteur d'énergie un jeu (P) de paramètres affecté à l'indication du type d'appareil respectif.

10. Ballast suivant la revendication 9,
**caractérisé**
- **en ce que** le dispositif de commande a une mémoire (222), dans laquelle est mémorisé, en vue d'être donné au dispositif répartiteur d'énergie pour un nombre donné à l'avance de types (G) d'appareil, respectivement un jeu (P) de paramètres et
- **en ce que** le dispositif de commande achemine au dispositif répartiteur d'énergie, dans le cas d'une entrée du côté de l'utilisateur d'une indication (G) de type d'appareil, le jeu (P) de paramètres s'appliquant respectivement.

11. Ballast suivant la revendication 10 ou 11,
**caractérisé en ce que**
le jeu de paramètres indique au moins une grandeur caractéristique de consommation du dispositif consommateur d'énergie, notamment la consommation maximum, la durée de consommation et/ou la fréquence de consommation du dispositif consommateur d'énergie.

12. Ballast suivant l'une des revendications précédentes 5 à 11,
**caractérisé en ce que**
le ballast est relié, par construction, au dispositif consommateur d'énergie ou y est intégré.
